# EUROPEAN PATENT SPECIFICATION

(11) **EP 1 739 887 B1**
(45) Date of publication and mention of the grant of the patent: **21.10.2009**
(21) Application number: 06290998.1
(22) Date of filing: 20.06.2006
(51) Int. Cl.: H04W 48/16

(54) **Wireless classroom response system**
Drahtloses Antwortsystem für Klassenzimmer
Système de réponse sans fil pour salles de classe

(30) Priority: 27.06.2005 US 694414 P; 21.10.2005 US 729428 P
(43) Date of publication of application: 03.01.2007
(73) Proprietor: Renaissance Learning, Inc, Wisconsin Rapids, WI 54495-8036 (US)
(72) Inventor: Swanson, Mark R., Wisconsin Rapids, Wisconsin 54494 (US); Moss, William L. Jr., Wisconsin Rapids, Wisconsin 54494 (US); Jungwirth, Peter William, Wisconsin Rapids, Wisconsin 54494 (US); Dreher, Richard D., Wausau, Wisconsin 54401 (US); Hickey, John R., Wisconsin Rapids, Wisconsin 54494 (US); Goodmanson, Dean A., Port Edwards, Wisconsin 54469 (US)
(74) Representative: Burbaud, Eric

(56) References cited:
- EP-A- 1 351 145
- EP-A- 1 427 228
- WO-A2-20/05039146
- GB-A- 2 375 014
- US-A1- 2004 072 136
- US-A1- 2004 203 563
- US-A1- 2005 070 294
- US-A1- 2005 086 261
- YINONG CHEN ET AL: "Task-oriented modelling of autonomous decentralised systems" AUTONOMOUS DECENTRALIZED SYSTEMS, 2000. PROCEEDINGS. 2000 INTERNATIONAL WORKSHOP ON CHENGDU, CHINA 21-23 SEPT. 2000, LOS ALAMITOS, CA, USA,IEEE COMPUT. SOC, US, 21 September 2000 (2000-09-21), pages 172-179, XP010520357 ISBN: 0-7803-6575-5
- JUN-XHAO SUN ET AL: "Design and implementation of Java-based HTTP input channel for integrated WLAN and GPRS networks" NETWORKS, 2004. (ICON 2004). PROCEEDINGS. 12TH IEEE INTERNATIONAL CONFERENCE ON SINGAPORE 16-19 NOV. 2004, PISCATAWAY, NJ, USA,IEEE, US, 16 November 2004 (2004-11-16), pages 258-262, XP010777564 ISBN: 0-7803-8783-X
- CRISTEA P D ET AL: "Intelligent E-learning environments architecture and basic tools" INFORMATION TECHNOLOGY BASED HIGHER EDUCATION AND TRAINING, 2004. ITHET 2004. PROCEEDINGS OF THE FIFTH INTERNATIONAL CONFERENCE ON ISANBUL, TURKEY 31 MAY - 2 JUNE 2004, PISCATAWAY, NJ, USA,IEEE, 31 May 2004 (2004-05-31), pages 610-615, XP010741761 ISBN: 0-7803-8596-9
- DIGIANO C ET AL: "Collaboration design patterns: conceptual tools for planning for the wireless classroom" WIRELESS AND MOBILE TECHNOLOGIES IN EDUCATION, 2002. PROCEEDINGS. IEEE INTERNATIONAL WORKSHOP ON 29-30 AUG. 2002, PISCATAWAY, NJ, USA,IEEE, 29 August 2002 (2002-08-29), pages 39-47, XP010606180 ISBN: 0-7695-1706-4
- NAGARAJA K ET AL: "Evaluating the impact of communication architecture on the performability of cluster-based services" HIGH-PERFORMANCE COMPUTER ARCHITECTURE, 2003. HPCA-9 2003. PROCEEDINGS. THE NINTH INTERNATIONAL SYMPOSIUM ON 8-12 FEB. 2003, PISCATAWAY, NJ, USA,IEEE, 8 February 2003 (2003-02-08), pages 229-240, XP010629516 ISBN: 0-7695-1871-0
- STERRITT R ET AL: "Personal autonomic computing self-healing tool" ENGINEERING OF COMPUTER-BASED SYSTEMS, 2004. PROCEEDINGS. 11TH IEEE INTERNATIONAL CONFERENCE AND WORKSHOP ON THE BRNO, CZECH REPUBLIC 24-27 MAY 2004, PISCATAWAY, NJ, USA,IEEE, 24 May 2004 (2004-05-24), pages 513-520, XP010711521 ISBN: 0-7695-2125-8
- AYMERICH F M ET AL: "An automatic assessment system supporting computer science entrance examinations" ADVANCED LEARNING TECHNOLOGIES, 2004. PROCEEDINGS. IEEE INTERNATIONAL CONFERENCE ON JOENSUU, FINLAND 30 AUG. - 1 SEPT. 2004, PISCATAWAY, NJ, USA,IEEE, 30 August 2004 (2004-08-30), pages 657-659, XP010741148 ISBN: 0-7695-2181-9

## Description

The invention relates generally to wireless classroom response systems, and, more particularly, to wireless classroom response systems in which each student has a handheld unit that can wirelessly send messages to a computer.

When a lesson is presented to a class of students it is often difficult to gauge whether the students are absorbing or even paying attention to the lesson. Wireless classroom response systems address this difficulty. Some currently-existing systems are deficient however, in that they do not permit the student to choose from multiple wireless networks. Others use proprietary communication schemes, thereby inhibiting the development of hardware and software by third-party vendors.

In accordance with the foregoing, a wireless classroom response system according to claim 1 is provided. In an embodiment of the invention, the system includes a wireless network that is located proximate to a classroom, a base station that coordinates the activities of the wireless network, and a plurality of handheld units. Each handheld unit is associated with an attendee of a class (either on a long-term or "owned basis, or on an ad-hoc or "shared" basis). Each handheld unit performs a discovery process that includes the steps of randomly choosing a wireless channel, attempting to discover the presence of the wireless network on the channel, and repeating these two steps if no wireless network is discovered. The wireless network may be one of many wireless networks, some of which may be located distant from the classroom in which the class that the attendee is actually attending. The discovery process can also include the handheld unit making multiple beacon requests, and the base station responding to at least one of those requests by transmitting a beacon frame that includes the identity of the network for which the base station is acting as the coordinator. In one implementation, the base station directs the handheld unit to a channel that has the least amount of traffic. This helps ensure that no single wireless channel on the network becomes overloaded with too many handheld units trying to communicate.

Other embodiments are disclosed in the dependant claims.

Other steps that the handheld unit may take in carrying out the discovery process include refraining from attempting discovery until the user (the attendee that is using the handheld unit) does something that actually requires connection to a wireless network. Once the user does do something requiring connection (such as joining a session that is currently taking place on one of the wireless networks), the handheld unit searches its memory to identify the wireless network to which it was previously connected. Once it identifies the "last good network," it displays the name of that network to the user, and asks the user whether the user wishes to reconnect to that network. If the user indicates that the answer is "yes," the handheld unit reconnects to that "last good network."

In an embodiment of the invention, the discovery process can be used to take either an inventory of the handheld units or to take attendance of the class. In other words, whenever a handheld unit connects to a wireless network, the base station can "count" the handheld unit as part of an inventory of the handheld units, or it can count the attendee that is presently using that handheld unit as "present" for the class.

In one embodiment of the invention, the base station includes a computer and a wireless access point communicatively linked to the computer, each of which perform "health checks" to ensure that connectivity between the two remains viable. Accordingly, the computer expects periodic check-ins from the access point. If a predetermined number of check-ins are missed, then the computer tries to restart the wireless access point. Similarly, the access point expects periodic check-ins from the computer, and if a predetermined number are missed, then the access point reboots itself.

In another embodiment of the invention, the base station provides software updates to the handheld units. If, during an update, a handheld unit loses contact with a wireless network, then the handheld unit goes into a "desperate mode," in which it connects to the first wireless network that it can find, and requests the latest available version of the software.

In yet another embodiment of the invention, the system has a wireless network, handheld units communicatively linked to the wireless network, and a base station that is also communicatively linked to the wireless network. In this embodiment, each handheld unit has a display screen and a navigation control (*e.g*., navigation buttons). The base station transmits questions to the handheld unit, which are displayed on the display screen of the handheld unit. The user (an attendee of a class) can use the navigation control to scroll through the text of each question. Additionally, the navigation control is overloaded, so that the attendee can put the navigation control into a second mode, in which it can be used to jump from one question to another.

In yet another embodiment of the invention, the handheld unit can be used as a calculator. The user (the attendee or student) enters a calculation, which is then transmitted over a wireless network to the base station. The base station (e.g., a computer that is part of the base station) performs the calculation and sends the result back to the handheld unit. The handheld unit then displays the result on its display screen.

In still another embodiment of the invention, at least one of the handheld units can be used (*e.g*., by a teacher or other presenter) to perform administrative tasks, such as controlling the pace at which the base station transmits the questions or retrieving an attendee's PIN.

Another embodiment of the invention is a wireless response system for use in a class that has multiple attendees. The system includes a wireless network, handheld units communicatively linked to the wireless network, and a base station communicatively linked to the wireless network. The base station transmits multiple questions to the handheld units. Each of the handheld units has a display screen for displaying the questions, and a non-volatile memory. Each of the handheld units has an "owned" mode, in which information regarding one of the attendees (*i.e.,* the attendee that "owns" the unit) is stored in the non-volatile memory. Furthermore, each of the handheld units has a "shared" mode, in which no person-specific information about any of the attendees is stored in the non-volatile memory.

In still another embodiment of the invention, each of the handheld units is capable of broadcasting an "alert" in response to a particular input made by the user. The alert is received by the base station, which then acknowledges the alert and contacts an emergency response system (*e.g.,* via the internet or other public network). The base station can transmit information about the user to the emergency response system including location information. If GPS equipment is integrated with the base station or the handheld unit, the location information can be relatively precise. An operator at the emergency response system can transmit questions to the user, which show up on the handheld unit. These questions can include questions regarding the nature of the emergency. If the handheld unit is "owned," then the base station can automatically retrieve information about the user from a database, and provide that information to the emergency response system.
FIG. 1 illustrates a wireless classroom response system according to an embodiment of the invention;
FIGS. 2 & 3 illustrate a handheld unit that may be used in an embodiment of the invention;
FIG. 4 illustrates another handheld unit that may be used in an embodiment of the invention.
FIG. 5 illustrates a classroom activity that is conducted in a teacher-paced, prompted mode;
FIG. 6. illustrates a classroom activity that is conducted in a teacher-paced, unprompted mode;
FIG. 7 illustrates a classroom activity that is conducted in a student-paced, prompted mode;
FIGS. 8 & 9 illustrate classroom activities that are conducted in student-paced, unprompted mode;
FIG. 10 illustrates how the handheld unit may function as a calculator in an embodiment of the invention;
FIG. 11 illustrates a software architecture used in an embodiment of the invention;

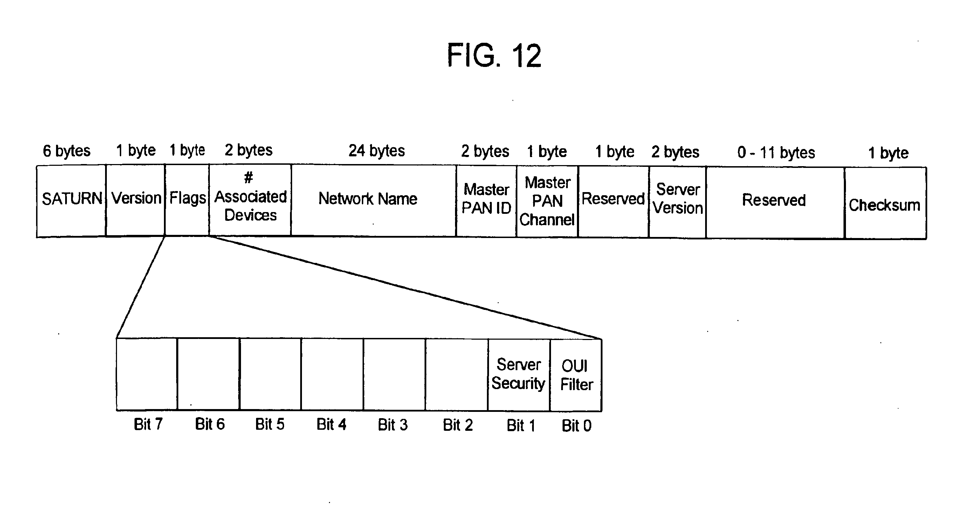

FIG. 12 illustrates the format of a network identification beacon payload according to an embodiment of the invention;
FIG. 13 illustrates the format of a datagram according to an embodiment of the invention; and
FIG. 14 illustrates the format of datagram segments according to an embodiment of the invention.

### General Architecture

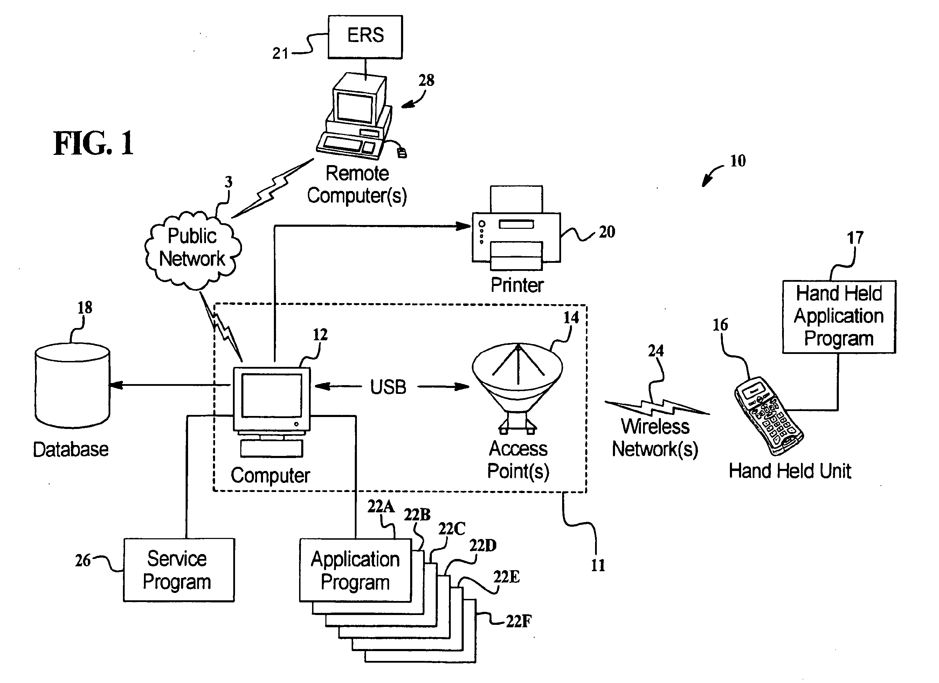

The architecture and operation of a wireless audience response system configured according to an embodiment of the invention will now be described. Referring to FIG. 1, the response system, generally labeled 10, includes a base station 11, a plurality of handheld units 16, and one or more wireless networks 24. The base station 11 includes a computer 12 and a one or more wireless access points (APs) 14. The computer 12 is communicatively linked to the AP 14 via universal serial bus (USB), while each AP 14 is communicatively linked to the handheld units 16 via a wireless network 24. The system 10 also includes a database 18 on which data representing questions and their corresponding answers are stored. The system 10 also includes a printer 20 communicatively linked to the computer 12, which allows an instructor or other speaker to print out results of tests or surveys taken by users of the handheld units 16, first through sixth application programs 22A-22F (generically referred to as application programs 22) executing on the computer 12, which dictate how the computer 12 administers the questions transmitted to the handheld units 16 and processes the answers received in response thereto, and a service program 26, which provides communication and routing services to the application programs 22 and the handheld units 16. Finally, the system 10 may be communicatively linked with one or more remote computers 28 via a public network 3 (e.g., the Internet). At least one of the remote computers 28 hosts a web site from which questions may be downloaded. Also, student and class data may be stored on the remote computer 28.

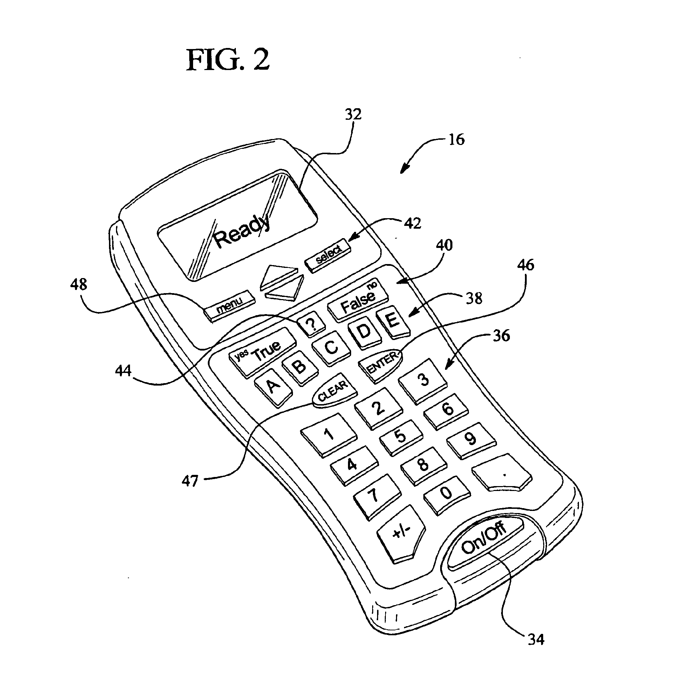

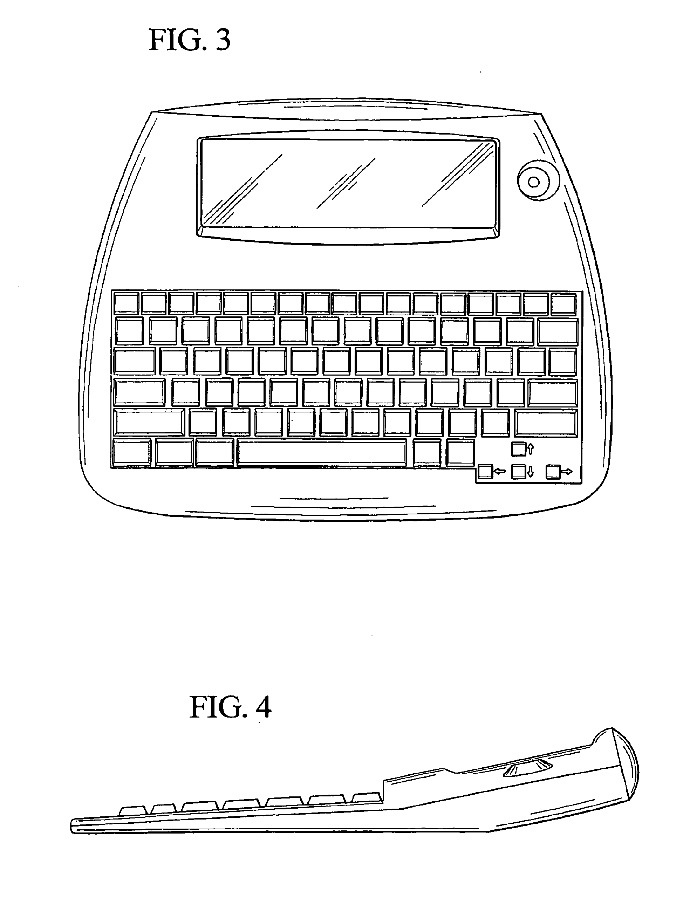

In this embodiment, each AP 14 is a Universal Serial Bus (USB) device that includes a microprocessor (e.g., an ARM processor) and an 802.15.4 chip set. The AP 14 carries out the functions of an 802.15.4 PAN Coordinator and also serves as the access point for devices to communicate with one of the wireless networks 24. The handheld units 16 include 802.15.4 chip sets and execute a handheld application program 17 that enables them to communicate wirelessly with the service program 26 on the computer 12 via an AP 14. By submitting requests via the service program 26, the handheld units 16 use services of the application programs 22 hosted on the computer 12 to obtain such things as academic content, data synchronization, real time response activities, etc. Possible embodiments of the handheld units 16 are shown in FIGS. 2, 3 & 4. For ease of reference, the embodiment depicted in FIG. 2 will be referred to as a Type I handheld unit while the embodiment depicted in FIGS. 3 & 4 will be referred to as a Type II handheld unit. In many of the examples contained herein, the Type I handheld unit will be also referred to by the moniker "Responder."

Although any of a variety of communication protocols may be used in conjunction with the system 10, according to various embodiments, each wireless network 24 of the system 10 communicates using an open network protocol, such as the IEEE 802.15.4 standard. When implemented using the IEEE 802.15.4 standard, each wireless network 24 operates as a personal area network (PAN). When deployed in a school environment, each classroom may have its own wireless network 24, with its own PC 12 and one or more APs 14 communicatively linked thereto.

Referring again to FIG. 1, the computer 12 is connected to the APs 14 via a USB cable. The APs 14 act as wireless access points on the wireless networks 24. The application program 22 interacts with an operating system and service program 26 (both executing on the computer 12) to send and receive data over a communications link which, in this embodiment, is a USB interface, through an AP 14, and over a wireless network 24 which, in this embodiment, is an IEEE 802.15.4 compliant network. To communicate with the handheld units 16, the application program 22 defines a service handler application programming interface (API) 23. The application program 22 sends hypertext transport protocol (HTTP) messages via the port along with markup language documents to the handheld units 16. The handheld units 16 respond as specified in the markup language documents, and those responses are received via the service handler API 23.

### The Handheld Unit

Referring to FIG. 2, an example of a Type I implementation of the handheld unit 16 will now be described. It is understood, however, that other configurations are possible. The handheld unit 16 is designed to be inexpensive, lightweight, rugged, and simple to use. It includes a microcontroller, flash memory, and a communications circuit. It executes software (in the form of firmware) that is depicted in FIG. 1 as the handheld application program 17. It has a graphical liquid crystal display 32 and twenty-five keys to support multiple response types. The keys include an ON/OFF key 34, a group 36 of numeric keys, a group 38 of multiple choice keys, a group 40 of positive/negative keys, a group 42 of navigation keys (including up and down arrow keys, and a SELECT key), an ENTER key 46, and a CLEAR key 47. The ON/OFF key 34 is configured so as to reduce the chance of accidental pressing (having, for example, raised ribs on the enclosure or being aligned just below flush with the enclosure). As shown in FIG. 2, the keys are grouped into functional areas. For example, the group 38 of multiple choice keys A thru E is commonly used when responding to multiple choice questions. The group 36 of numeric keys, 0 thru 9, is used when responding to a question requiring a numeric reply. Each group of keys has elements that indicate to the user that the keys are, in fact, part of the same group. Possible ways to accomplish this include, but are not limited to key style (shape, color, label text font/size/color, etc.) and separators in enclosure (altitude, channels, borders, etc.)

The operation of the handheld unit 16 according to an embodiment of the invention will now be described. The general usage pattern is as follows: the user receives a question, which is either displayed on the LCD screen 32, or provided some other way, such as verbally or written. The user presses one or more keys to formulate a response. In one embodiment, key action is invoked on key closure. The user then presses the ENTER key 46 to transmit the response wirelessly to the base station 11. The handheld unit 16 has a response queue acts as a holding area for responses. The content of this queue changes when keys are pressed and is displayed prominently on the LCD 32. However, the actual data stored in the queue and transmitted is not necessarily what the user sees on the LCD screen 32. For example, when LCD 32 displays "True," a single data byte can be used to represent a positive response. This is done to minimize memory use and data packet size. The maximum response size is based on the size of the LCD screen 32, the font size, and/or the amount of memory available in the microcontroller of the handheld unit 16.

The functions of individual keys and groups of keys shown in FIG. 2 according to an embodiment of the invention will now be described. Pressing the ON/OFF key 34 with no other keys down toggles the device state (on or off). Pressing the CLEAR key 47 causes a response queue to be cleared. The response queue is also cleared when the handheld unit 16 is powered on.

When the ENTER key 46 is pressed, the contents of the response queue are transmitted via the wireless communication circuit. During transmission, the text "Sending" is displayed on the LCD screen 32 until the next question is received from the base station 11 (FIG. 1).

The multiple choice keys group 38 is used to enter single key responses. When one of the keys of this group is pressed, the handheld unit 16 replaces the contents of the response queue. The group 40 of positive/negative keys is similarly used to enter single key responses. As with the multiple choice keys, pressing one of the positive/negative keys causes the handheld unit 16 to replace the contents of the response queue. In addition to indicating an answer of "true" or "false," the positive/negative keys are used for Yes/No responses. The handheld unit 16 also includes a "?" key 44, may be used as a "help" key.

The group 36 of numeric keys is used to enter multi key responses. Positive, negative, whole, and decimal numbers may be entered. If the response queue contains a multiple choice or a positive/negative response when a numeric key is pressed, an implied CLEAR is executed first. When a key of the numeric key group 36 is pressed, the associated value is added to the rightmost position of the response queue, unless the queue is full, in which case it is ignored.

The group 42 of navigation keys permits the user to navigate through a user interface that is displayed on the screen 32. For example, the user can use the navigation keys to scroll up or down and to highlight items that the user wishes to select (using the SELECT key). When the wireless response system is deployed in a classroom, the navigation keys allow the user to scroll through the text of the question that is currently being displayed on the screen 32, or to navigate to an entirely different question. In one embodiment, the handheld unit overloads the arrow keys. In this embodiment, the default behavior of the arrow keys is to scroll through the text of the question currently being displayed. If the user presses the "?" key 44, the function of the arrow keys changes, such that they permit the user to jump to the next or the previous question instead of scrolling text. Furthermore, if the user presses the SELECT key while the arrow keys are in this overloaded mode, a menu appears, prompting the user to enter the question number to which the user wishes to navigate. By responding to this prompt, the user can jump to any question. Pressing the "?" key 44 a second time causes the arrow keys to revert to their default behavior of scrolling text. Overloading the arrow keys in this manner allows for user-friendly navigation without increasing the number of keys on the handheld unit 16.

In an embodiment of the invention, the handheld unit 16 manages power as follows. The microprocessor sleeps as much as possible (between keypresses) to maximize device runtime. Furthermore, the handheld unit 16 automatically powers off after 30 minutes of inactivity, regardless of key states. A continuously held-down key does not constitute activity. If one or more keys are held down accidentally by something sitting on the device or during storage or transport, the handheld unit 16 powers itself off when the timeout interval expires, and does not power on again until all keys are released and only the ON/OFF key 34 is pressed.

### Owned and Shared Device Modes

According to an embodiment of the invention, the wireless response system permits each handheld unit 16 (FIG. 1) to be designated either as "shared" ― used by multiple people ― or as "owned" ― used by only one person. When a handheld unit 16 is in shared mode, no user information is stored on it. Once the unit is powered off by one user, another user can power it on and use it without any repercussions. In contrast, when a handheld unit 16 is in owned mode, it stores ownership information such as the user's name and the PIN selected by the user, in its memory. It also stores user data such as homework and notes. A handheld unit 16 that is in owned mode may also use a virtual "key chain" having one or more "keys." The virtual key chain (or simply "key chain") stores authentication information for a particular user. Each "key" may be used to authenticate the user (and the handheld unit 16) to a wireless network 24 and/or to one of the application programs 22. The virtual key chain is stored in a memory of the handheld unit 16. The purpose of the virtual key chain is to simplify connection of the handheld unit 16 to the wireless networks 24 and/or to the application programs 22 by automatically supplying credentials without the need for user intervention.

### Response Modes

According to an embodiment of the invention, there are two basic modes in which audience members can respond to a presenter using the handheld units 16: prompted and unprompted. In a prompted response mode, a question is displayed on the handheld units 16, and the audience members answer the displayed question. In an unprompted response mode, the question is not presented on the handheld units 16, but by some other method, such as a presenter reading it aloud or an audience member reading it on a handout. In an unprompted mode, the audience member still answers the question using the handheld unit 16.

### Types of Activities

In an embodiment of the invention, individuals use the handheld units 16 (FIG. 1) in the context of what will be referred to herein as "activities." An "activity" is made up of one or more discrete tasks referred to as "actions." An activity can be a single action or a complex sequence of actions. For example, an activity can be something as simple as displaying a message to one of the handheld units 16, or an activity can be something more sophisticated such as requesting a response to a multiple-choice question. An activity can have a static design, such as a quiz that includes 10 actions, each action being a question, each action being performed sequentially. Other activities may use dynamic, adaptive branching that relies on the logic of the application program 22 to inspect each response to a question and determine what the next action should be. Some activities are classified as "live." That is, they are intended to be conducted while the handheld units 16 are communicatively linked to the computer 12.

The application programs 22 carry out some activities that are paced by the presenter and some activities that are paced by the audience members. Since many of the examples described herein are set in the context of a classroom environment, these two types of activities will be referred to herein as "teacher-paced" and "student-paced." It is understood, of course, that the invention is not limited to classroom use. A teacher-paced activity is one in which the class participates as a whole, and where each student responds to questions generated by an application program 22. In a teacher-paced activity, the teacher controls the pace at which questions are transmitted to the handheld units 16. For example, the students may be shown only one question at a time on their handheld units 16, and the question is shown only when specified by the teacher. Students then answer only when the teacher allows the responses to be collected. If a student fails to keep pace with the class, then the application program 22 can speed the student ahead to the current action in the activity, the next time the fallen-behind student responds in any way using his handheld unit 16. A student-paced activity is one in which each student views questions and responds at his own speed. Students can be given individual student-paced activities, or the entire class may be given the same student-paced activity. The student-paced activity may be configured so that overloading of the navigation keys (discussed above) is enabled, thereby giving students the ability to navigate back and forward through questions.

### Teacher-Paced, Prompted Activity

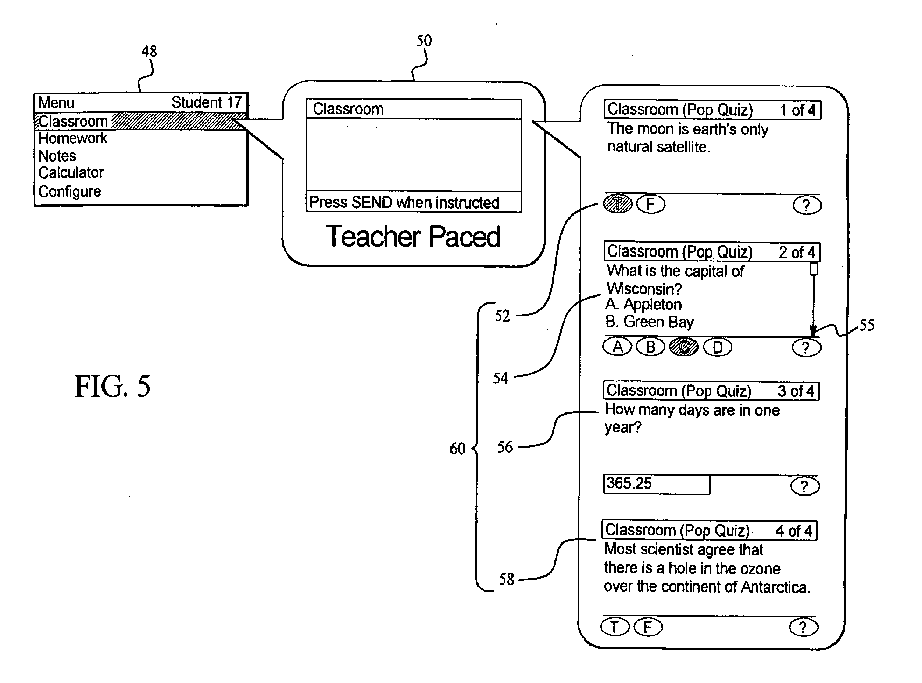

An example of a teacher-paced, prompted activity will now be described with reference to FIGS. 1 and 5. First, the application program 22 transmits a mark-up language document to the plurality of handheld units 16. The mark-up language document includes instructions for presenting a sequence 60 of questions on the handheld units 16 (for a pop quiz). Each handheld unit 16 then interprets the instructions contained in the mark-up language document and, accordingly, displays the first question 52 in the sequence. Each student has the opportunity to respond to the first question 52 by making the appropriate input to the student's handheld unit 16. When the teacher makes the appropriate input to the computer 12, the application program 22 transmits a message to the handheld units 16, that causes the handheld units to permit the students to advance to the second question 54 in the sequence 60. Note that the display containing the second question 54 includes a scroll bar 55. This process continues, with the third and fourth questions 56 and 58 being enabled in succession until the teacher ends the quiz by making the appropriate input to the computer 12.

Alternatively, one of the handheld units 16 may be placed into a "remote control" mode to allow the teacher to use that handheld unit 16 initiate a session and control the pacing of the questions via the keypad of the handheld unit 16 and one of the wireless networks 24. This remote control mode allows the teacher to leave her desk and visit with the students. In the context of a presentation, the presenter can put a handheld unit 16 into remote control mode and move about the audience while controlling a live activity. The presenter can pace the session, view the questions that the participants are asking, chose a question template to transmit to the audience handheld units for ad hoc Q&A sessions, etc.

### Teacher-Paced, Unprompted Activity

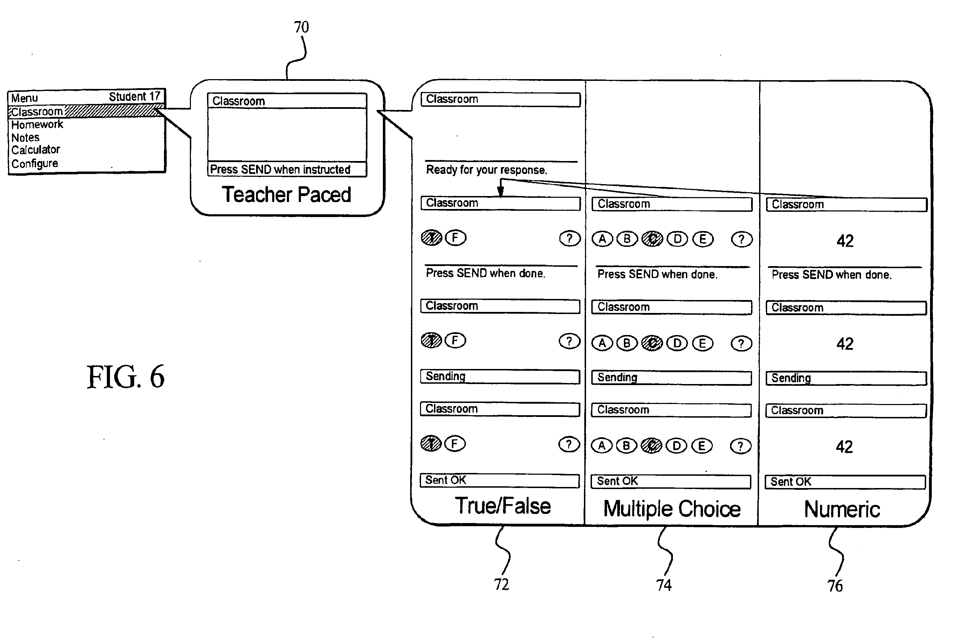

FIG. 6 illustrates the sequence of displays shown on each handheld unit 16 for a quiz that is given in a teacher-paced, unprompted mode. The sequence of actions is similar to that described in conjunction with FIG. 6, except that the mark-up language document transmitted by the application program 22 to the handheld units 16 (FIG. 1) does not include questions but rather includes one or more answer templates, such as a True/False template 72, multiple choice template 74 and a numeric template 76. The handheld units 16 display the answer templates on their respective LCD screens 32. Furthermore, instead of the questions being presented on the LCD screen 32 of each of the handheld units 16, the teacher reads the questions aloud to the students.

### Student-Paced, Prompted Activity

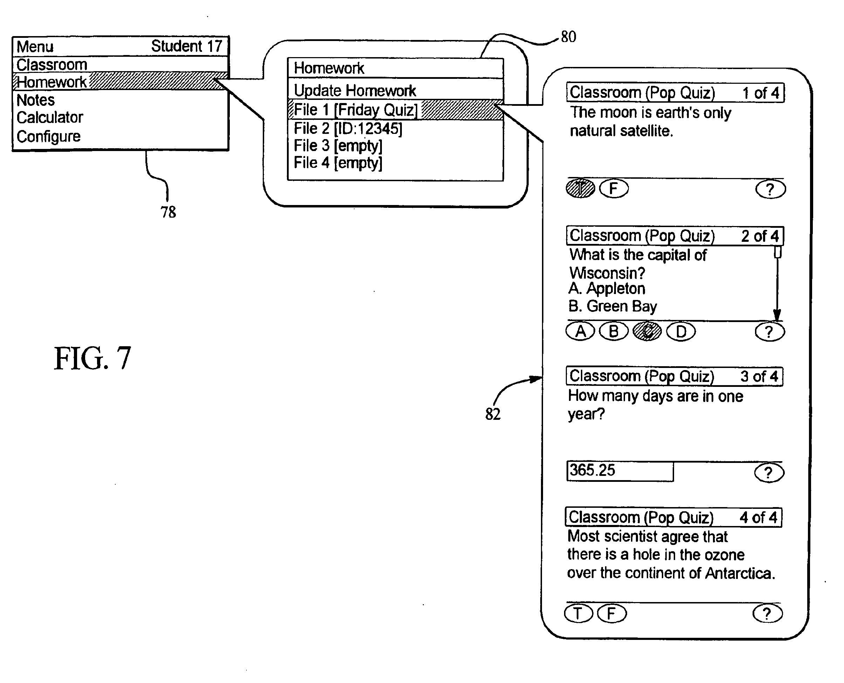

According to an embodiment of the invention, the response system 10 (FIG. 1) can also be used to allow the teacher to distribute homework assignments, and to allow the students to complete and turn in the homework assignments. In such an embodiment, the application program 22 transmits one or more mark-up language documents representing a homework assignment to the handheld units 16. Outside of class, the students individually complete the homework assignment by making the appropriate inputs into their respective handheld units. FIG. 7 illustrates the sequence of displays shown on a handheld unit for an example homework assignment in a student-paced, prompted mode. The student selects "homework" from a first menu 78, then selects "Friday Quiz" from a second menu 80. In response, the handheld unit 16 displays a sequence 82 of questions (i.e., in a "prompted" mode) that the student must answer. During the next classroom session, the student makes the appropriate inputs to the handheld unit 16 to cause it to transmit her answers to the application program 22, thereby "turning in" the completed homework assignment.

### Student-Paced, Unprompted Activity

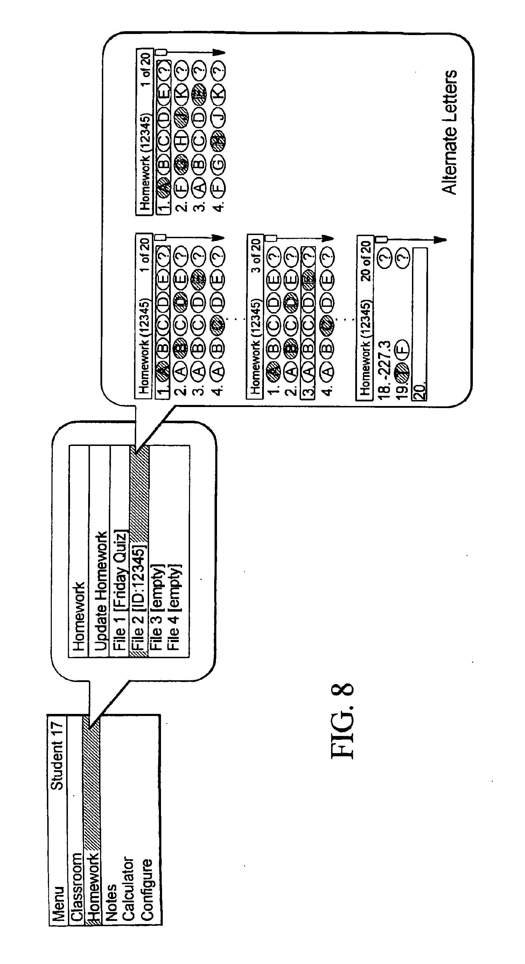

The sequence of displays for another example homework assignment is shown in FIG. 8. In this example, the teacher gives handouts containing the questions to the students, and the mark-up language document that the handheld units 16 receive from the application program 22 only contains answer templates. Otherwise, the procedure for completing and turning in the homework assignment is the same as described in conjunction with FIG. 7.

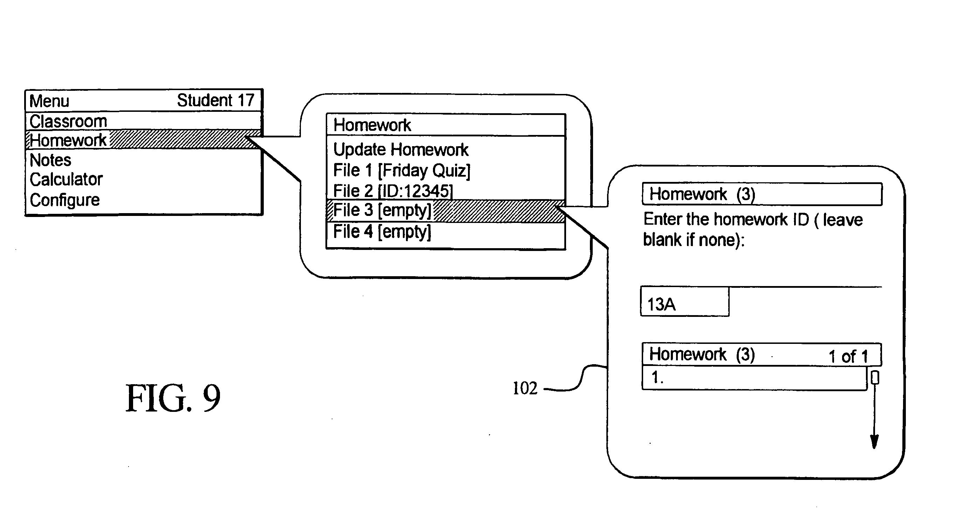

Yet another sequence of displays for a homework assignment is shown in FIG. 9. In this example, however, the teacher gives handouts containing the questions to the students. Furthermore, the application program 22 does not transmit a mark-up language document to the handheld units 16 for answering the questions, but the students instead use a generic answer form 102 that is pre-stored in the handheld units 16. Otherwise, the procedure for answering the questions and turning in the answers is the same as described in conjunction with FIGS. 7 and 8.

### Calculator Function

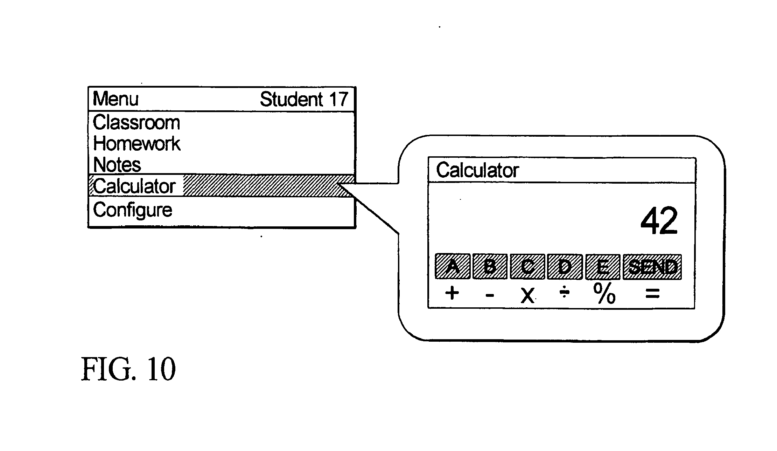

According to an embodiment of the invention, the handheld unit 16 is also able to function as a calculator. FIG. 10 illustrates how this functionality appears on the LCD screen 32. Many of the calculations themselves are not performed by the handheld unit 16, however. Instead they are performed by the computer 12. Thus, when a user enters an expression using the keypad of the handheld unit 16, the expression is transmitted via one of the wireless networks 24 to the computer 12. Complex operations such as floating-point math are performed by a computation engine executing as part of the service program 26. The computer 12 then transmits the results of the operation back to the handheld unit 16 for display to the user. This off-loading feature enables the handheld unit 16 to be low-cost in terms of the memory it requires and in terms of how powerful of a microprocessor is required. The teacher may, by making the appropriate input to the computer 12 (FIG. 1), cause the application program 22 to send commands to the handheld units 16 that will disable the calculator function.

### The Service Program

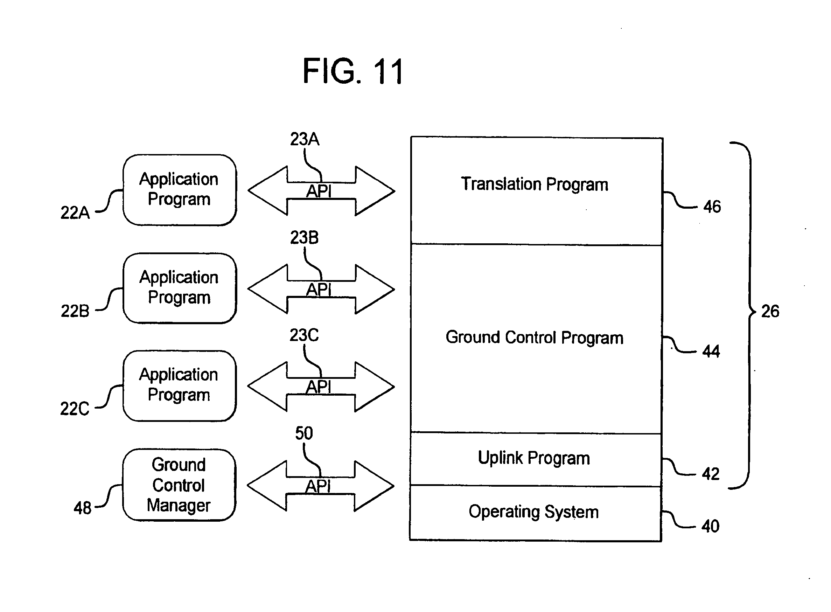

Referring to FIG. 11, with appropriate reference to FIG. 1, a more specific embodiment of the software that executes on the computer 12 will now be described. The software includes an operating system 40 and the service program 26. The service program 26 includes an uplink program 42, a ground control program 44, and a translation program 46. The computer 12 also hosts first, second, and third application programs 22A, 22B, and 22C. Each of the application programs calls or can be called by the translation program 46 or the ground control program 44 via an application programming interface (API). A first API 23A facilitates interaction between the translation program 46 and the first application program 22A, a second API 23B facilitates interaction between the ground control program 44 and the second application program 22B, and a third API 23C facilitates communication between the ground control program 44 and the third application program 22C. The application programs 22A-22C send and receive data to and from the handheld units 16 via the ground control program 44. In one embodiment, the first application program 22A provides services to Type I handheld devices. The Type I handheld devices communicate using a compact markup language referred to herein the Saturn Datagram Markup Language (SDML), which the translation program 46 translates into Extensible Markup Language (XML) to provide to the first application program 22A. Similarly, XML documents that the first application program 22A sends to the Type I handheld units are passed to the translation program 46, which converts them into SDML documents, which are then transmitted to the handheld units 16. The second application program 22B provides services to Type II handheld units, which communicate in XML. Thus, communication between the second application program 22B and the Type II handheld units does not need to be processed by the translation program 46.

Referring still to FIG. 11, the uplink program 42 is responsible for handling the initial USB connection and low-level communication to the AP 14. The ground control program 44 provides a communications gateway between the handheld units 16 and the application programs. The ground control program 44 also provides a USB interface to the AP 14, upper layer management services for the 801.15.4 media access control (MAC), datagram fragmentation and assembly services, and device management services. In providing device management services, the ground control program 44 executes utilities to configure and manage the handheld units 16 via a user interface (such as a Windows® or Macintosh® user interface).

### The Ground Control Manager

Referring still to FIG. 11, the computer 12 executes a ground control manager program 48 that is separate from the ground control program 44. The ground control manager program 48 is a utility that is used to configure the AP 14, assign device ownership, inspect connected devices, and perform other management tasks. The application programs 22, working with the ground control program 44 via the appropriate API can also implement many of the management tasks normally performed by the ground control manager program 48.

### Firmware Update

One function that the ground control manager program 48 performs is wireless updates to the firmware executing on the handheld units 16. Each handheld unit 16 can be updated independently. A system administrator may, for example, order a firmware update on CD-ROM or download it from the internet, and install the update on the computer 12. The ground control manager program 48 reports the available update or updates to the handheld units 16 via a wireless network 24 (FIG. 1). The handheld application program 17 on each handheld unit 16 prompts the user to select which updates should be installed. To prevent inadvertent updates, the handheld unit 16 may also require administrator authentication proceed with the update. The handheld unit 16 that is being updated loads a small, self-contained program, referred to as the "bootloader," and makes it permanently resident in memory. The bootloader manages the process of requesting and receiving the new firmware and storing it in the flash memory of the handheld unit 16. The bootloader is preferably as small as possible, in order to preserve limited memory in the handheld unit 16. Thus, the bootloader contains a minimal user interface and does not have a full communications stack. Information regarding the network connection and the selected firmware update is passed from the handheld application program 17 to the bootloader via a shared non-volatile memory space. If the handheld unit 16 looses power or looses communication with a wireless network 24 during an update, it puts itself into what will be referred to as "desparate mode," in which it scans for and automatically connects to the first wireless network 24 that it finds. The ground control manager program 48 responds by transmitting, to the handheld unit 16, the latest version of the handheld application program 17 that it has, thereby allowing the handheld unit 16 to return to its normal operating state.

### Floating Administration

In addition to updating the firmware of the handheld units 16, the ground control manager program 48 can perform the functions of recovering a lost PIN for a handheld unit 16 and resetting its ownership to shared mode. In one embodiment, any administrator or authorized person (not just the one that issued the handheld unit 16 to the user) can initiate these functions from the handheld unit 16. For example, if a user forgets his PIN, he does not need to worry about going back to the administrator that assigned the handheld to him, but may seek out any authorized person responsible for the administration of any wireless network 24 for support. The authorized person requests, via the ground control manager program 48, the recovery of the user's PIN. The administrator enters an administrative PIN (which may be a PIN that is known to all of the wireless networks 24) via the keypad to complete the recovery.

### Network Discovery

In an embodiment of the invention, the handheld units 16 (FIG. 1) connect to the wireless networks 24 (which are personal area networks in this embodiment) using the IEEE 802.15.4 Low-Rate Wireless Personal Area Network standard. The application programs 22 running on the computer 12 connect to one or more of the wireless networks 24 via TCP/IP sockets. The ground control program 44 (FIG. 11), the USB, and the AP 14 bridge the communications between application programs 12 and the handheld units 16. As part of the network discovery process, the handheld units 16 locate the wireless networks using an 802.15.4 active scan. An active scan locates 802.15.4 PAN coordinators by stepping through logical channels in the 802.15.4 airspace (starting from the lowest channel and working up to the highest channel), and issuing a beacon request. In some embodiments, the handheld unit 16 issues multiple beacon requests. This helps to compensate for losses of beacon responses due to collisions that may occur in high-traffic situations (particularly on non-beacon networks). Each PAN coordinator (e.g., each AP 14) in the wireless networks 24 that receives the request (or requests), responds to the request with a 802.15.4 beacon frame. Within this frame is the beacon payload carrying the Network Identifier Block, which will be discussed below in further detail.

In one embodiment of the invention, each of the handheld units 16 performs its active scan by randomly choosing the channel on which to begin the scan (instead of starting with the lowest channel). Furthermore, instead of stepping through the channels in sequence, each handheld unit 16 scans the channels in random order. This scheme reduces the chances of any particular channel being overloaded during the discovery process.

Once a handheld unit 16 is connected to one of the wireless networks 24, the application programs 22 can interact with it. Furthermore, the very act of connecting to the wireless network 24 enables the service program to include the handheld unit 16 as part of an inventory of the handheld units 16. The service program 26 can also use the fact of the handheld units 16 connecting to a wireless network 24 as representing the attendance of the user of the device. Thus, for example, if John Smith is the "owner" of a handheld unit 16, and his handheld unit 16 connects to a wireless network 24, then the service program 26 lists John Smith as being present. This list is displayed to an administrator on a user interface on the computer 12.

### Network Identifier Block

The Network Identifier Block that each PAN coordinator transmits to the handheld units 16 in response to a beacon request contains information about the PAN to which the PAN coordinator belongs. The format of the Network Identifier Block in an embodiment of the invention is show in Table 1 below.

**Table 1**

| **Field** | **Size** | **Description** |
|---|---|---|
| SATURN | 6 bytes | Fixed field header identifying the beacon originated from one of the wireless networks. Value is an unterminated ASCII string equal to the value "SATURN". |
| Version | 1 byte | ***Version:*** Identifies the version of the Network Identifier block. Version is two 4 bit BCDs of the form *Major.Minor* Current version is 0x01 |
| | | ***MAC OUI Filtering Enable**:* Bit 0. If set, the AP 14 will only accept device associations for those whose MAC OUI is equal to its own. |
| Flags | 1 byte | ***Server Security** Use:* Bit 1. If set, the sever is using security. Note that Frame Control Field Security bits may not be set even though this bit is set. This situation occurs when simple atgencrypt security is used by the server. In this situation, only data requests have security and will have their Frame Control Security bits set. |
| Associated Devices | 2 bytes | ***Associated Devices Count:*** The number of active devices associated to the AP 14. |
| Network Name | 24 bytes | ***Network Name**:* Name assigned to the wireless network. Format is a null terminated ASCII string if length is less than 24 bytes. If name is 24 bytes, no termination is used. |
| Master PAN ID | 2 bytes | ***Master PAN ID**:* The ID of the PAN master for each individual PAN that is hosted by the computer 12. Multiple PANs exist for computers that have more than one AP 14 connected to its USB port. |
| Master PAN Channel | 1 byte | ***Master PAN Channel**:* The channel number of the PAN master. This value along with the Master PAN ID are used to match PANs belonging to a server. |
| | 1 byte | Reserved |
| Server Version | 2 bytes | ***Server Version:*** The major.minor version of the service program 26 in BCD. Example: 01.12 = 0x0112 |
| Checksum | 1 byte | ***Checksum**:* A checksum computed over the block to provide a second level of identification of wireless networks. An 8-bit checksum. It is calculated by adding the block bytes together. On receipt of the beacon payload, the handheld unit 16 performs the same checksum calculation and on a mismatch, deems the beacon (e.g., the AP 14) as not belonging to a valid wireless network. |

The Network Name field is intended for use by each handheld unit 16 to help determine whether or not to associate to the wireless network 24. This name is set by the owner/administrator of that wireless network. When the system 10 is deployed in a classroom environment, the administrator/owner may be the instructor. The string can be displayed to the user along with other wireless networks that were found in the active scan, thereby allowing the user to make the choice of which wireless network 24 to join. The handheld application program 17 connects to the wireless network via the ground control program 44 (hosted on the computer 12). The ground control program 44 provides a TCP/IP port for connection. The identifier for the AP 14 is simply the localhost or IP address of the computer 12 along with the TCP port number. In one embodiment, the AP 14 port number will be selected at random from the Internet Assigned Numbers Authority (IANA) dynamic and private port range of 49152 to 65535.

### Reconnecting to a Previously Available Network

Each time a handheld unit 16 (FIG. 1) establishes a connection to a wireless network 24 (in an embodiment of the invention), the handheld unit 16 stores the information about that network (which will be referred to as the "last good network") in its non-volatile memory, including the name of the network (obtained from the Network Identifier Block of the beacon response). When the handheld unit 16 is powered on, it does not attempt to connect to a wireless network 24 until the user does something that actually requires a network connection. When the user does do something that requires a connection (such as joining a classroom session), the handheld unit 16 retrieves the last good network information from its non-volatile memory and checks for the presence of that network. If that network is present, the handheld application program 17 (FIG. 1) displays a visual prompt that asks the user whether the user would like to stay connected to that network. The prompt includes the name of the network. If the last good network is not detected as present, or if the user chooses "no," then the handheld unit 16 performs a full network scan. This "lazy" reconnection scheme reduces the number of times that the handheld unit 16 performs active scans and thus helps to extend the life of the handheld unit's batteries. Furthermore, by displaying the network name to the user when prompting for a reconnect, the handheld unit 16 helps to prevent connection to the wrong wireless network 24.

### Load Balancing Among Access Points

When a handheld unit 16 (FIG. 1) connects to one of the wireless networks 24, it broadcasts a beacon request, and receives responses, in the form of beacon frames, from one or more APs 14. In an embodiment of the invention, the handheld unit 16 uses the contents of the "Associated Devices" field of the Network Identifier Block in each of the beacon frames to identify which of the access points has the fewest number of handheld units 16 already associated with it. The handheld unit 16 then connects to that access point (AP 14). This ensures proper load balancing among the access points of each network. Another way in which the system 10 performs load balancing is as follows. Each time a handheld unit 16 requests data from the computer 12 (or from one of the application programs 22 executing thereon), the ground control manager program 48 determines whether there are any other available APs 14 that have fewer devices associated with them than the AP 14 to which the handheld unit 16 is currently associated. If there are, then the ground control manager program 48 directs the handheld unit 16 to reconnect to the AP 14 that has the fewest number of devices associated with it.

### Health Check and Network Recovery

According to an embodiment of the invention, the system 10 (FIG. 1) provides for two-way health monitoring between the computer 12 and each of the APs 14. Specifically, the service program 26 (FIG. 1) periodically performs a "health check" on each of the APs 14. The service program 26 does this by checking in with each of the APs 14 at predetermined intervals. Likewise, each of the APs 14 periodically checks in with the service program 26 at predetermined intervals. If an AP 14 fails to check in with the service program 26 after a maximum-acceptable number of intervals, the service program 26 attempts to restart that AP 14 (and, hence, the wireless network 24 that is being coordinated by that AP 14). If the AP 14 still fails to check in after the service program 26 makes a maximum-acceptable number of restart attempts, then the service program 26 designates the AP 14 as stalled, and gives the system administrator feedback on the computer 12 via a server log and a server utility user interface. From the point of view of the AP 14, a similar flow of logic occurs. If the AP 14 does not receive a check-in from the service program 26 after a maximum-acceptable number of intervals, the AP 14 reboots itself into a standby mode. In the standby mode, the wireless network 24 for which the AP 14 is the PAN coordinator is stopped, and no requests from the handheld units 16 on that network are processed. The frequency of health checks made by both the service program 26 and the AP 14, as well as the maximum-acceptable number of missed health checks and restart attempts are system-configurable.

The previously-described health check mechanism is sufficiently flexible to detect major problems, while still being able to recover from temporary losses of connectivity with the APs 14. For example, if a USB cable connecting the AP 14 and the computer 12 comes loose or is inadvertently disconnected for a short period of time, only a few health checks will be missed (by the service program 26 and the AP 14). If the cable is reconnected before the maximum-acceptable number of health checks are missed, then the service program 26 restarts the AP 14 using its previous network settings, and traffic between the AP 14 and the handheld units 16 resumes without any need for the users to manually reconnect or to perform any other initial setup.

### Structure of the Saturn Protocol Datagram

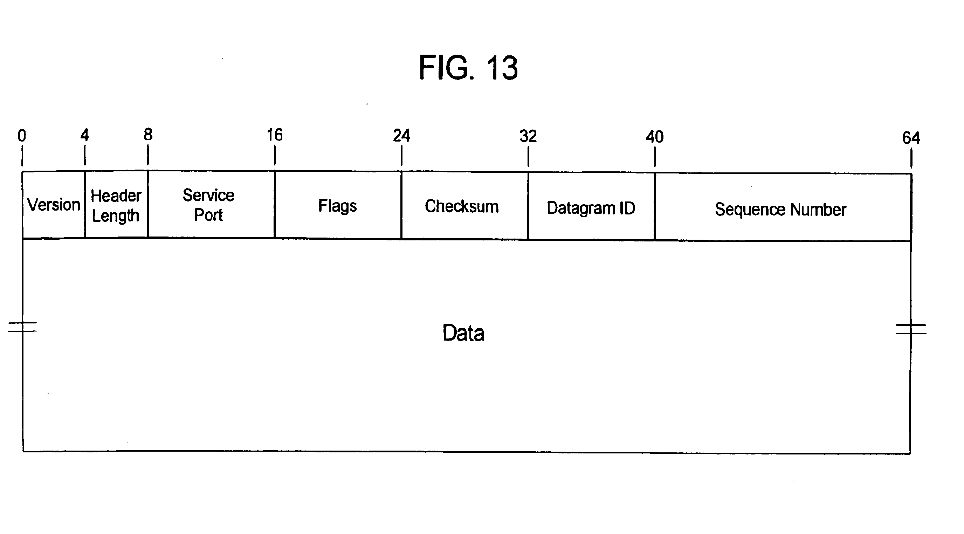

In an embodiment of the invention, data transmitted between the handheld units 16 and the base station 11 is carried in 802.15.4 data frames using a delivery construct that will be referred to herein as Saturn Protocol (SP) datagrams. SP datagrams use a segment format similar to the TCP/IP segment format and have the structure depicted in FIG. 13. The content of the various fields of an SP datagram is described below in Table 2.

**Table 2**

| **Field** | **Size** | **Description** |
|---|---|---|
| Version | 4 bits | ***Version***: Identifies the version of the Saturn Protocol used to generate the datagram. |
| HL | 4 bits | ***Header Length***: Length of the header in bytes. Value for version 0x1 header is 0x8. |
| Service Port | 1 byte | ***Service Port***: Identifies the service port for the message. Services are provided on the host via handlers. |
| | | Values 0x00 - 0x3f are reserved. |
| | | 1 (0x01) = Ground Control |
| | | 2 (0x02) = Ground Control Manager |
| | | 3 (0x03) = Firmware Manager |
| | | 4 (0x04) = Server Manager |
| | | 5 (0x05) = Owner Assignment Manager |
| | | |
| | | Application service assignments: |
| | | 64 (0x40) = Responder |
| | | 65 (0x41) = Type II device |
| | | 66 (0x42) = Print Server |
| Flags | 1 byte | ***Segment Flags***: |
| | | FIN (0x01) no more data. Indicates the final closure signal for the datagram transfer of bytes. |
| | | SYN (0x02) synchronize sequence number. Indicates the initial synchronizing message. |
| | | ACKR (0x04) acknowledgment requested. Indicates the sender is requesting acknowledgement. |
| | | ACK (0x10) acknowledgment. Indicates acknowledgement of the number of bytes specified in the sequence number. |
| | | NASS (0x20) not associated. If set by the PAN coordinator, the sending device is not associated and thus the datagram is rejected. |
| Checksum | 1 byte | ***Checksum:*** Checksum of the header bytes. |
| Datagram ID | 1 byte | ***Datagram Identifier:*** Identifies the datagram the segment belongs to. |
| Sequence Number | 24 bits | ***Sequence Number**:* Specifies the current byte sequence being sent. For a SYN segment, this number provides the starting point for sequencing the bytes to be delivered. For transfers larger than 2^24 bytes, the sequence number is wrapped back around as needed. |
| Data | Variable | ***Data:*** The datagram data. |

The Datagram ID field is used to identify datagram segments during a transaction using 802.15.4 data request and data indication communication protocols. Datagram IDs are simple 8 bit IDs that are incremented each time a new transaction is started by the sender.

The Sequence Number field is used to determine the portion of the data payload the segment carries. The arrival of the datagram segment with the FIN bit equal to 1 indicates that the final segment. Reception of the FIN segment does not mean the datagram assembly is complete as it is possible previous segments may have been lost and are in the process of being resent. Determining that a datagram is completed is based on examining the sequence for missing segments.

The ground control program 44 automatically assembles data into segments for application programs (such as the first, second, and third application programs 22A, 22B, and 22C) that use its services. The handheld devices 16, however, provide their own services for segmentation of data.

In an embodiment of the invention, SP datagram segments are limited in size by the Maximum Transmission Units (MTU) of the 802.15.4 MAC data frame. Depending on the security suite in use for the 802.15.4 network, this MTU can be reduced due to overhead of encryption and freshness implementations. In an unsecured network, the MTU is 102 bytes. To construct a segment, a template header with the Version, Header Length, Service Port, and Datagram ID fields is created and then used to send each segment of the data in an 802.15.4 data frame. The SYN flag is set for the first segment. The FIN flag is set for the last segment. The Sequence Number for the first segment should start at 0. Remaining segments have their Sequence Number set based on the byte sequence they carry.

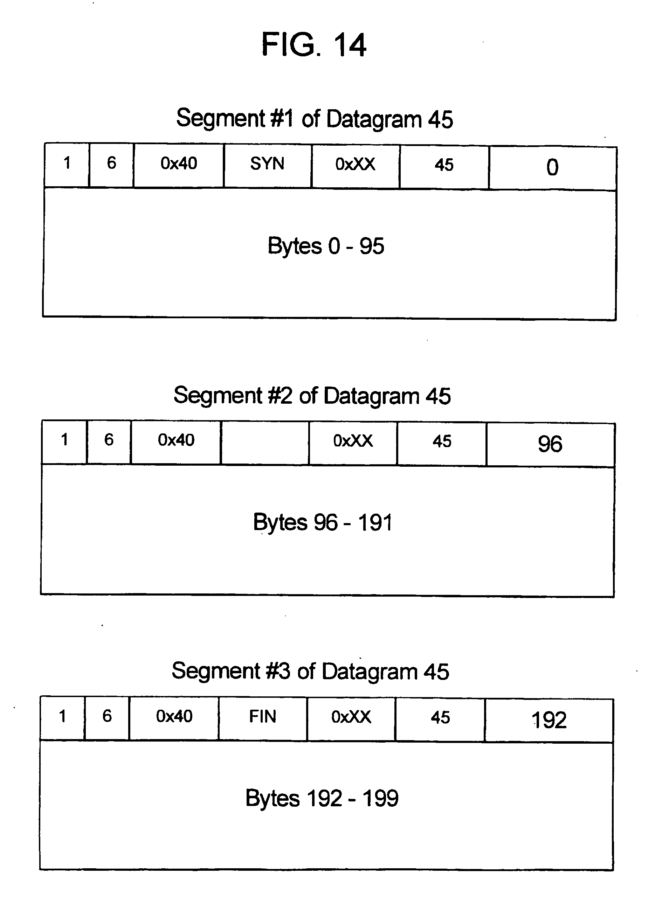

Referring to FIG. 14, an example of an SP datagram is shown. In this example, it is assumed that 200 bytes of data are being sent, and that the datagram is number 45 in sequence. This package requires a total of three 802.15.4 MAC data frames (102 byte MTU) to send the entire message. When segments arrive at the computer 12, they are matched up according to the sender's 802.15.4 address from the MAC data frame, and the Service Port and Datagram ID field values in the SP datagram header.

### High Level Communication Between the Base State and Handheld Units

In accordance with an embodiment of the invention, the handheld units 16 (FIG. 1) communicate with the computer 12 of the base station 11 using a compact protocol. One implementation of the compact protocol will be referred to herein as Saturn Device Transport Protocol (SDTP). The handheld units 16 and the computer 12 also communicate using a compact mark-up language format. One implementation of the compact protocol will be referred to herein as the Saturn Device Mark-up Language (SDML). Messages sent between the handheld units 16 and the computer 12 are in the form of requests for services (from the handheld unit 16 to the computer 12) and responses (from the computer 12 to the handheld unit 16). Referring to FIG. 11, it is the ground control program 44 that processes such requests from handheld units.

### Obtaining Services from the Application Programs

Referring again to FIG. 11, each application program 22 may "register" with the ground control program 44 to provide one or more services. Such registered application programs are also referred to herein as "service handlers." For an application program to act as a service handler, it expresses an API for receiving data from the handheld units 16, and an API for receiving data from handheld units 16. Both APIs are represented by the APIs 23 in FIGS. 1 and 11. Each SP datagram includes a "Service" field that is used to determine the application program (service handler) that will handle processing the data payload. Example entries for this field are "Responder" to identify the application program that processes requests from Type I handheld units, "Type II" to identify the application program that processes requests from Type II handheld units and "Print Server" to identify the application that processes print request.

When SP datagrams from a handheld unit 16 are constructed and sent over the one of the wireless networks (FIG. 1), datagram segments arrive at the ground control program 44 (FIG. 11), which assembles them. After assembly of the datagram segments, the ground control program 44 extracts the payload along with the source address of the handheld unit 16 that sent the datagram. This address and the data payload are then "routed" (via the appropriate socket) to the application program 22 that has previously registered (via a service port provided by the ground control program 44) with the ground control program 44 to handle that particular type of request. The application program 22 then processes the request. In most cases, the processing results in the execution of business logic and the return of a response to the handheld unit 16 that initiated the communication. If no application program 22 has registered with the ground control program 44 for a particular service, the datagrams requesting that service are ignored. Depending on the service, an error response may be returned to the handheld unit 16. If an application program 22 does respond, the response is put into a datagram payload by the ground control program 44 and fragmented as needed before being routed to the handheld unit 16 for which it is intended.

As shown in FIGS. 1 and 11, there can be several application programs 22 running at any time. For example, the application program 22A could register with ground control program 44 to handle requests for Type I handheld units, and the application program 22B could register to handle requests for Type II handheld units. Future services can also be accommodated in the ground control program 44 by simply requesting a service assignment ID from one of the remote computers 28 (FIG. 1).

To request services from one or more application programs according to an embodiment of the invention, a handheld unit 16 forms and transmits a "service request" to the computer 12. A service request is formed using Hypertext Transport Protocol (HTTP) POST message. When the computer 12 receives a datagram from a handheld unit 16, the ground control program 44 identifies which application program has registered to handle the datagram, and then calls a "ReceiveData" service of that application program. If an application program wishes to send data to a handheld unit 16, the application program calls a "SendData" service of the ground control program 44.

In an embodiment of the invention, the ground control program 44 itself offers certain services to the application programs 22. These services are available through a service port defined by the ground control program 44, and allow the application programs to get and set information for the handheld units 16, configure the APs 14, and connect/disconnect to the handheld units 16.

### Student Alert System

As discussed previously, when the system 10 (FIG. 1) is deployed in a classroom environment, the handheld units 16 are operated by attendees of the class, such as students. In one embodiment of the invention, the service program 26 and the handheld application program 17 include software for implementing a student alert system, in which a student or other attendee can, in an emergency, use his or her handheld unit 16 to broadcast an alert. To trigger the alert, the student presses and holds down a particular key on the handheld unit 16 (the selection of the key and the amount of time required for the keypress to trigger the alert are configurable). Upon detecting the alert input by the student, the handheld application program 17 causes the handheld unit 16 to broadcast an 802.15.4 orphan notification command along with a reserved extended address. For example, if the handheld unit 16 normally has a 16 bit address, its orphan notification command includes the 16 bit address plus an addition 4 bit extension. Upon receiving the orphan notification with the extended address (the "alert") from the handheld unit 16, the service program 26 assumes that the handheld unit 16 is in alert mode. The service program 26 then ignores all data traffic that it receives from all other handheld units 16 or application programs 22, so as to devote all of the resources of the computer 12 to servicing the alert. The service program 26 responds to the handheld unit 16 (using the extended address as the destination address) to confirm that the alert has been received. The response of the service program 26 is identified as such in the "service port" field of the SP datagram header (see, e.g., FIG. 13). The response may include anything from a simple message that help is on the way to a series of questions relating to the nature of the student's emergency. Upon receiving the alert, the service program 26 also issues an alert message to an Emergency Response System (ERS) 21 via the public network 3 and one of the remote computers 28. The communication between the computer 12 and the remote computer 28 in this context occurs through a web services connection, which exposes a web services application programming interface (API). Accordingly, any ERS operator having software that can access the web services API can respond to the student (via the public network 3, the base station 11, one of the wireless networks 24 and the handheld unit 16). The operator can then inquire about the student's location, the nature of the alert, etc. Communication between the ERS operator and the student may occur using the same format described above for classroom quizzes ― by exchanging mark-up language documents and by using HTTP GET and POST commands. For example, upon receiving an alert, the ERS operator could post a question, and the user could respond with yes, no, a, b, c, d, e, or by using numeric keys.

According to one embodiment, the service program 26 also determines whether the handheld unit 16 that is broadcasting the alert is "owned," such as by referring to the ownership information in the database 18. If the handheld unit 16 is owned, the service program 26 obtains ownership information from the database 18 and transmits information about the owner, such as his or her name, to the ERS operator. Furthermore, the service program 26 may also transmit information regarding the location of the base station 11 to the ERS operator. Such information is configurable by the system administrator of the computer 12, and is stored in the database 18. For example, the information may include the room in which the base station 11 is located, such as "Science Lab, Room 102," "3^{rd} Floor Room 310," or "Fitness Room." In some embodiments, the base station 11 includes Global Positioning System (GPS) equipment. In such a case, the service program 26 can use data from the GPS equipment to transmit precise location data to the ERS operator. In other embodiments, the handheld unit 16 includes GPS equipment, in which case it can use the GPS data to transmit its location to the service program 26, which then relays that location information to the ERS operator.

### Conclusion

It can be seen from the foregoing that a new and useful wireless classroom response system has been described. It should be noted that the use of the terms "a" and "an" and "the" and similar referents in the context of describing the invention (especially in the context of the following claims) are to be construed to cover both the singular and the plural, unless otherwise indicated herein or clearly contradicted by context. It should also be noted that recitation of ranges of values herein are merely intended to serve as a shorthand method of referring individually to each separate value falling within the range, unless otherwise indicated herein, and each separate value is incorporated into the specification as if it were individually recited herein.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. Preferred embodiments of this invention are described herein, including the best mode known to the inventors for carrying out the invention. It should be understood that the illustrated embodiments are exemplary only, and should not be taken as limiting the scope of the invention.

## Claims

1. A wireless response system for use in a class, the system comprising:
a wireless network (24) located proximate to a room in which the class is being conductedand having a plurality of wireless channels;
a base station (11) adapted to coordinate the activities of the wireless network; a plurality of handheld units (16), each of the plurality of handheld
units being associated with an attendee of the class, **characterized in that** a handheld unit of the plurality of handheld units comprises
- selection means for randomly choosing a wireless channel
- transmission means for sending at least one beacon request in order to attempt to discover the presence of the wireless network ; and
- a controller operable to repeatedly activate the selection means and the transmission means if the discovery of the presence of the wireless network fails.

2. The system of claim 1, wherein the transmission means are adapted to send a plurality of beacon requests.

3. The system of claim 2, wherein the base station comprises a receptor for receiving at least one of the requests and transmission means for transmitting a beacon frame that includes the identity of the wireless network, in response to the received request.

4. The system of claim 1, the wireless network being one of a plurality of wireless networks, wherein at least one of the plurality of handled units comprises:
- power-on means,
- transmission means adapted to be unconnected to the wireless network,
- a detector for detecting that associated class attendee of the handheld unit has performed an action that requires the handheld unit to connect to a wireless network of the plurality of wireless networks;
- identity retrieving means for retrieving the identity of the last wireless network of the plurality of wireless networks to which it was previously connected;
- human interface adapted to ask the associated attendee whether the attendee wishes to reconnect to the identified last wireless network; and
the transmission means are further adapted to connect to the identified last wireless network when the human interface receives an affirmative response from the associated attendee.

5. The system of claim 1, wherein the base station further comprises selection means for identifying which wireless channel has the least amount of wireless network traffic and the transmission means are adapted to direct the handheld unit to connect to the wireless network using the identified wireless channel

6. The system of claim 1, wherein the base station further comprises:
- identification means for identifying which of the plurality of handheld units has successfully discovered the wireless network; and
- a display for displaying a list of the identified handheld units to a system administrator.

7. The system of claim 1, wherein the base station comprises- identification means for identifying which of the plurality of handheld units has successfully discovered the wireless network;
- association means for determining which attendee is associated with the identified handheld units; and
- a display for displaying a list of the attendees associated with the identified handheld units to a system administrator.

## Patentansprüche

1. Drahtloses Antwortsystem zur Verwendung in einer Klasse, wobei das System folgendes umfaßt:
ein Funknetz (24), das bei einem Raum angeordnet ist, in dem die Klasse abgehalten wird, und mehrere Funkkanäle aufweist;
eine Basisstation (11), die dafür ausgelegt ist, die Aktivitäten des Funknetzes zu koordinieren;
mehrere handgehaltene Einheiten (16), wobei jede der mehreren handgehaltenen Einheiten mit einem Teilnehmer der Klasse assoziiert ist, **dadurch gekennzeichnet, daß** eine handgehaltene Einheit der mehreren handgehaltenen Einheiten folgendes umfaßt:
- Auswahlmittel zum zufälligen Auswählen eines Funkkanals
- Übertragungsmittel zum Senden mindestens einer Bakenanforderung, um zu versuchen, die Anwesenheit des Funknetzes zu entdecken; und
- einen Controller, der dahingehend betätigt werden kann, die Auswahlmittel und die Übertragungsmittel wiederholt zu aktivieren, falls die Entdeckung der Anwesenheit des Funknetzes mißglückt.

2. System nach Anspruch 1, wobei die Übertragungsmittel dafür ausgelegt sind, mehrere Bakenanforderungen zu senden.

3. System nach Anspruch 2, wobei die Basisstation einen Empfänger umfaßt zum Empfang mindestens einer der Anforderungen und Übertragungsmittel zum Übertragen eines Bakenrahmens, der die Identität des Funknetzes enthält, als Reaktion auf die empfangene Anforderung.

4. System nach Anspruch 1, wobei das Funknetz eines von mehreren Funknetzen ist, wobei mindestens eine der mehreren gehandhabten Einheiten folgendes umfaßt:
- Einschaltmittel,
- Übertragungsmittel, die dafür ausgelegt sind, mit dem Funknetz unverbunden zu sein,
- einen Detektor zum Detektieren, daß der assoziierte Klassenteilnehmer der handgehaltenen Einheit eine Aktion durchgeführt hat, die erfordert, das die handgehaltene Einheit mit einem Funknetz der mehreren Funknetze verbunden wird;
- Identitätsabrufmittel zum Abrufen der Identität des letzten Funknetzes der mehreren Funknetze, mit dem es zuvor verbunden war;
- eine Benutzeroberfläche, die dafür ausgelegt ist, den assoziierten Teilnehmer zu fragen, ob der Teilnehmer wünscht, wieder mit dem identifizierten letzten Funknetz verbunden zu werden; und
wobei die Übertragungsmittel weiterhin dafür ausgelegt sind, mit dem identifizierten letzten Funknetz zu verbinden, wenn die Benutzeroberfläche eine bestätigende Antwort von dem assoziierten Teilnehmer empfängt.

5. System nach Anspruch 1, wobei die Basisstation weiterhin Auswahlmittel zum Identifizieren umfaßt, welcher Funkkanal die geringste Menge an Funknetzverkehr aufweist, und die Übertragungsmittel dafür ausgelegt sind, die handgehaltene Einheit dahingehend anzuweisen, unter Verwendung des identifizierten Funkkanals mit dem Funknetz zu verbinden.

6. System nach Anspruch 1, wobei die Basisstation weiterhin folgendes umfaßt:
- Identifikationsmittel zum Identifizieren, welche der mehreren handgehaltenen Einheiten erfolgreich das Funknetz entdeckt hat; und
- ein Display zum Anzeigen einer Liste der identifizierten handgehaltenen Einheiten für einen Systemadministrator.

7. System nach Anspruch 1, wobei die Basisstation Identifikationsmittel zum Identifizieren umfaßt, welche der mehreren handgehaltenen Einheiten erfolgreich das Funknetz entdeckt hat;
- Assoziationsmittel zum Bestimmen, welcher Teilnehmer mit den identifizierten handgehaltenen Einheiten assoziiert ist; und
- ein Display zum Anzeigen einer Liste der mit den identifizierten handgehaltenen Einheiten assoziierten Teilnehmer für einen Systemadministrator.

## Revendications

1. Système de réponse sans fil pour salles de classe, le système comprenant :
un réseau sans fil (24) situé à proximité d'une salle dans laquelle un cours se déroule et ayant une pluralité de canaux sans fil ;
une station de base (11) apte à coordonner les activités du réseau sans fil ;
une pluralité d'unités portatives (16), chacune de la pluralité d'unités portatives étant associée à un participant au cours, **caractérisé en ce qu'**une unité portative de la pluralité d'unités portatives comprend :
- un moyen de sélection pour choisir au hasard un canal sans fil ;
- un moyen de transmission pour envoyer au moins une demande de balise pour essayer de découvrir la présence du réseau sans fil ; et
- un contrôleur utilisable pour activer à répétition le moyen de sélection et le moyen de transmission si la découverte de la présence du réseau sans fil échoue.

2. Système selon la revendication 1, dans lequel le moyen de transmission est apte à envoyer une pluralité de demandes de balise.

3. Système selon la revendication 2, dans lequel la station de base comprend un récepteur pour recevoir au moins l'une des demandes et un moyen de transmission pour transmettre une trame de balise qui comprend l'identité du réseau sans fil en réponse à la demande reçue.

4. Système selon la revendication 1, le réseau sans fil étant l'un d'une pluralité de réseaux sans fil, dans lequel au moins l'une de la pluralité d'unités portatives comprend :
- un moyen de mise sous tension ;
- un moyen de transmission apte à être déconnecté du réseau sans fil ;
- un détecteur pour détecter qu'un participant au cours associé à l'unité portative a effectué une action qui nécessite que l'unité portative se connecte à un réseau sans fil de la pluralité de réseaux sans fil ;
- un moyen d'extraction d'identité pour extraire l'identité du dernier réseau sans fil de la pluralité de réseaux sans fil auquel il a été précédemment connecté ;
- une interface humaine apte à demander au participant associé si le participant souhaite se reconnecter au dernier réseau sans fil identifié ; et
le moyen de transmission est en outre apte à se connecter au dernier réseau sans fil identifié lorsque l'interface humaine reçoit une réponse affirmative du participant associé.

5. Système selon la revendication 1, dans lequel la station de base comprend en outre un moyen de sélection pour identifier le canal sans fil qui a le plus faible volume de trafic de réseau sans fil et le moyen de transmission est apte à ordonner à l'unité portative de se connecter au réseau sans fil en utilisant le canal sans fil identifié.

6. Système selon la revendication 1, dans lequel la station de base comprend en outre :
- un moyen d'identification pour identifier laquelle de la pluralité d'unités portatives a découvert avec succès le réseau sans fil ; et
- un affichage pour afficher une liste des unités portatives identifiées à un administrateur de système.

7. Système selon la revendication 1, dans lequel la station de base comprend :
- un moyen d'identification pour identifier laquelle de la pluralité d'unités portatives a découvert avec succès le réseau sans fil ;
- un moyen d'association pour déterminer quels participants sont associés aux unités portatives identifiées ; et
- un affichage pour afficher une liste des participants associés aux unités portatives identifiées à un administrateur de système.
